# EUROPÄISCHE PATENTANMELDUNG

(11) **EP 4 108 061 A1**
(43) Veröffentlichungstag der Anmeldung: **28.12.2022**
(21) Anmeldenummer: 22179885.3
(22) Anmeldetag: 20.06.2022
(51) Int. Cl.: A01D 34/73

(54) **VERSCHLEISSSCHUTZVORRICHTUNG FÜR MÄHSCHEIBEN FÜR ROTORMÄHWERKE**

(30) Priorität: 24.06.2021 AT 505172021
(71) Anmelder: Gebrüder Busatis Gesellschaft m.b.H., 3251 Purgstall an der Erlauf (AT)
(72) Erfinder: Lutz, Wolfgang, 3250 Wieselburg (AT)
(74) Vertreter: Puchberger & Partner Patentanwälte

(57) **Zusammenfassung**

Die Erfindung betrifft eine Verschleißschutzvorrichtung für Mähscheiben für Rotormähwerke, wobei die Mähscheiben jeweils einen Mähteller (1) mit zentralem Antriebsbereich (3) und eine obere Mantelfläche (2) aufweisen und der Mähteller (1) an seiner Peripherie mit Mähklingen (15) bestückbar ist und wobei die Verschleißschutzvorrichtung durch eine auf der oberen Mantelfläche (2) befestigbare ein- oder mehrteilige Schutzhaube (12) gebildet ist.

## Beschreibung

Die Erfindung betrifft eine Verschleißschutzvorrichtung für Mähscheiben für Rotormähwerke, wobei die Mähscheiben jeweils einen Mähteller mit zentralem Antriebsbereich und eine obere Mantelfläche aufweisen und der Mähteller an seiner Peripherie mit Mähklingen bestückbar ist. Weiters betrifft die Erfindung eine Mähscheibe.

Die EP 1 378 588 B1 beschreibt, dass die Mähteller von Rotormähwerken durch die hohen Rotationsgeschwindigkeiten starken dynamischen Belastungen ausgesetzt sind, die zu lokalen Spannungskonzentrationen im Tellerkörper führen. Um diesen inneren Spannungsspitzen durch eine elastische Verformung des Tellerkörpers entgegenwirken zu können, erhalten die Mähteller durch Vergütungsverfahren, wie beispielsweise Bainitisieren, zwar die für eine elastische Verformbarkeit erforderliche Festigkeit und Zähigkeit, jedoch eine unzureichende Oberflächenhärte und Verschleißbeständigkeit. Das Problem des abrasiven Verschleißes am Mähteller in unmittelbarer Nähe des Bereiches der Lagerung der Mähklingen aber auch in davon weiter entfernten Bereichen wird in der EP 1 378 588 B1 ausführlich beschrieben. Die mit dem abrasiven Materialabtrag einhergehende Reduktion der Wandstärke des Tellerkörpers führt aufgrund der Querschnittsminderung zu einer weiteren Erhöhung der lokalen Spannungen und in der Folge zu Rissen und Brüchen. Um die Betriebssicherheit von Rotormähwerken zu gewährleisten, muss daher bei Unterschreitung einer kritischen Wandstärke oder Anzeichen einer Rissbildung der gesamte Mähteller ausgetauscht werden.

Es ist bekannt, dem abrasiven Verschleißangriff mit Verschleißschutzschichten, die durch Auftragschweißen oder Thermisches Spritzen direkt auf die Oberfläche des vergüteten Tellerkörpers aufgebracht werden, entgegenzuwirken. Nachteilig beim Auftragschweißen sind geometrische Kerben in den Auslaufbereichen der Auftragschweißnähte sowie metallurgische Kerben durch lokale Aufhärtungseffekte und Grobkornbildung in den Wärmeeinflusszonen des Schweißprozesses, die die elastische Verformbarkeit des Mähtellers einschränken. Während beim Thermischen Spritzen ohne nachträglichem Schmelzverbinden die mangelnde Haftzugfestigkeit der lediglich durch mechanische Verklammerung verbundenen Verschleißschutzschicht bei der zu erwartenden Verformung des Mähtellers zu deren Abplatzen führt, bewirkt der unvermeidliche Wärmeeintrag beim nachträglichen Schmelzverbinden der gespritzten Schicht in deren unmittelbar angrenzenden Umgebung ein Ausglühen und dadurch einen Verlust von Härte und Verschleißwiderstand des vorvergüteten Mähtellers.

Die EP 2 912 935 B1 zeigt einen Mähteller für ein Rotormähwerk mit einem Verschleißschutzelement, das mit dem Lagerbolzen der Mähklinge mitgeschraubt wird. Dieses schützt den Schraubkopf des Lagerbolzens durch einen U-förmig umschließenden Kragen vor Verschleiß. Derartige lösbar montierte und dadurch austauschbare Verschleißschutzelemente für die Lagerbolzen von Mähklingen werden beispielsweise auch in der EP 1 133 910 B1 als Lagerschild mit einer umschließenden Wandung und optionalem Gutleitelement oder in der EP 1 145 615 B1 als Halteglied mit einem umgebenden Steg offenbart.

Ausgehend von den angeführten Problemen und Nachteilen des Standes der Technik ist es eine Aufgabe der Erfindung, eine austauschbare Verschleißschutzvorrichtung sowohl für den Mähteller als auch für den Lagerbolzen der Mähklinge zu finden, ohne die mechanischen Eigenschaften des Tellerkörpers durch geometrische und metallurgische Kerben oder ein Ausglühen zu beeinträchtigen. Des Weiteren soll die Geometrie des Mähtellers nach dem Stand der Technik unverändert bleiben und beim Erreichen des Lebensdauerendes der Verschleißschutzvorrichtung soll nicht der komplette Mähteller demontiert werden müssen.

Die Verschleißschutzvorrichtung ist unter anderem dadurch gekennzeichnet, dass sie durch eine auf der oberen Mantelfläche des Mähtellers befestigbare ein- oder mehrteilige Schutzhaube gebildet ist. Die Schutzhaube kann am zentralen Antriebsbereich des Mähtellers befestigt, bevorzugt lösbar befestigt, sein.

Bevorzugt kann die Schutzhaube im Bereich der Lagerung der Mähklingen am Mähteller zusätzlich mittels Lagerbolzen befestigt sein.

Gegebenenfalls kann die Schutzhaube aus zumindest zwei Schutzhaubenteilen gebildet sein, die sich jeweils vom zentralen Antriebsbereich in Richtung Lagerung der Mähklingen erstrecken und mit einer nach unten gebördelten Randzone die Stirnfläche des Mähtellers an der Peripherie umgreifen.

Die Schutzhaube kann der Kontur der Mantelfläche folgend und zumindest abschnittweise an dieser anliegend ausgebildet sein, wobei im Bereich der Lagerung der Mähklinge eine Vertiefung zur Aufnahme des Schraubkopfes des Lagerbolzens der Mähklinge vorgesehen ist, um diesen zu schützen.

Gegebenenfalls ist die Oberfläche der Schutzhaube gehärtet und/oder mit einer vollflächigen oder mehreren partiellen Verschleißschutzzonen versehen.

Auf der Oberfläche der Schutzhaube kann zumindest ein von der Oberfläche vorstehendes Gutleitelement angeordnet sein.

Gegebenenfalls ist vorgesehen, dass das Gutleitelement mittels des Lagerbolzens mit dem Mähteller verschraubt ist und den Schraubkopf schützend überragt.

Das Gutleitelement kann Raststege aufweisen, die in Rastnuten der Schutzhaube einrasten.

Bevorzugt ist die Schutzhaube aus Stahl geformt.

Die Mähscheibe ist dadurch gekennzeichnet, dass sie mit einer Verschleißschutzvorrichtung mit den hier geoffenbarten Merkmalen versehen ist.

Jedem Schutzhaubenteil kann eine Mähklinge zugeordnet sein. Jedem Schutzhaubenteil können aber auch mehrere Mähklingen zugeordnet sein.

Zur Lösung der Aufgabe wird somit vorgeschlagen, dass die Verschleißschutzvorrichtung durch eine auf der oberen Mantelfläche des Mähtellers befestigbare Schutzhaube gebildet ist. Dazu ist eine ein- oder mehrteilige Schutzhaube zur lösbaren Montage auf der oberen Mantelfläche des Mähtellers vorgesehen. Die Befestigung der Schutzhaube erfolgt einerseits im zentralen Antriebsbereich des Mähtellers mittels jener Schrauben, die auch der reibschlüssigen Verbindung zur Übertragung des Antriebsdrehmoments der Tellernabe auf den Tellerkörper dienen und andererseits an den peripheren Bereichen der Lagerung der Mähklingen durch Verschraubung mit den Lagerbolzen der Mähklingen.

Durch die vorliegende Verschleißschutzvorrichtung kann ein Mähteller nach dem Stand der Technik konstruktiv unverändert bleiben und der Tellerkörper erfährt keine Beeinträchtigung jener Materialeigenschaften, die seine elastische Verformbarkeit gewährleisten. Dadurch kann ein optimaler Verschleißschutz des Mähtellers bei schneller Montage und Austauschbarkeit der Schutzhaube erreicht und die Wartungskosten reduziert werden.

Neben den abrasiv hochbeanspruchten Zonen der oberen Mantelfläche des Mähtellers schützt die Schutzhaube mit ihrer nach unten gebördelten Randzone in den Bereichen der Lagerung der Mähklingen auch die besonders verschleißexponiert am Umfang liegende senkrechte Stirnfläche des Mähtellers, indem sie sich haubenförmig über diese stülpt.

Die Schutzhaube weist im Bereich der Lagerung der Mähklingen eine topfförmige Vertiefung auf, um den Schraubkopf des Lagerbolzens durch dessen Versenkung gegenüber der umliegenden oberen Mantelfläche der Schutzhaube vor mechanischen Einwirkungen durch Fremdkörper und Verschleiß durch das abrasive Mähgut zu schützen. Optional kann ein Gutleitelement durch Formschlussmittel, wie beispielsweise Stege am Gutleitelement und Ausnehmungen in der Schutzhaube, an der oberen Mantelfläche der Schutzhaube positioniert und mit dem Lagerbolzen der Mähklinge fixiert werden. Das Gutleitelement ist ebenfalls im Bereich des Lagerbolzens topfförmig vertieft, um den Schraubkopf durch dessen Versenkung vor Verschleiß zu schützen.

Nachdem die Schutzhaube durch ihre reibschlüssige Verbindung mit dem Mähteller keiner so großen dynamischen Beanspruchung unterliegt wie der Mähteller selbst und auch keine tragende Funktion für die Mähklingen übernehmen muss, kann diese durch gezielte Werkstoffwahl und spezielle Vergütungsverfahren besonders verschleißbeständig gestaltet und vorzugsweise an der oberen Mantelfläche mit partiellen Verschleißschutzzonen versehen werden. Die partiellen Verschleißschutzzonen, die einen wesentlich höheren Verschleißwiderstand als der Grundkörper der Schutzhaube aufweisen können, werden beispielsweise durch Beschichtungs- oder Randschichtlegierungsverfahren realisiert. In vorteilhafter Weise erfolgt das Vergüten der Schutzhaube im Anschluss an das Herstellen der Verschleißschutzzonen um einen möglichen Härteverlust des Grundkörpers in den Wärmeeinflusszonen zu vermeiden. Das optionale Gutleitelement unterliegt bei der Erfüllung seiner Leit- und Förderfunktion für das abrasive Mähgut auch einer massiven Verschleißbeanspruchung und kann ebenfalls mittels der für die Schutzhaube angewandten Vergütungsverfahren und Verschleißschutzzonen besonders verschleißbeständig ausgeführt werden.

Nachstehend wird die Erfindung beispielhaft anhand von Ausführungsbeispielen gemäß Figuren beschrieben.
Fig. 1 zeigt eine Aufsicht auf ein erstes Beispiel einer Mähscheibe, wobei auf der rechten Hälfte ein erfindungsgemäßer Schutzhaubenteil aufgeschraubt ist.
Fig. 2 zeigt einen Schnitt nach Linie II-II in Fig. 1.
Fig. 3 zeigt die Schrägansicht des Schutzhaubenteils gemäß Fig. 1 oder 2.
Fig. 4 ist eine vergrößerte Darstellung des rechten Randbereiches der Mähscheibe in Fig. 2.
Fig. 5 und 6 zeigen beispielhaft zwei alternative Ausführungsformen von Mähscheiben gemäß Erfindung.

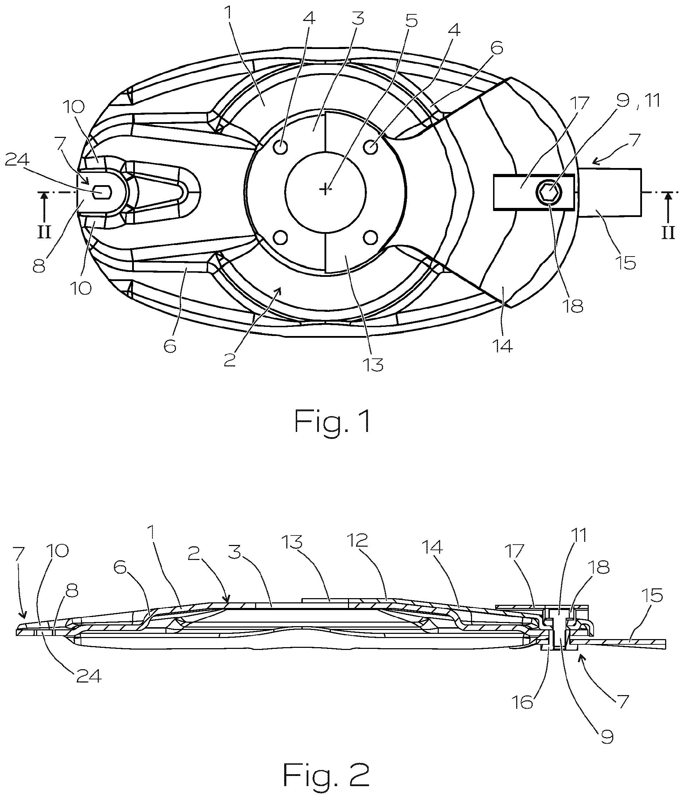

Die Mähscheibe gemäß Fig. 1 besitzt in dieser Ausführungsform eine längsgestreckte Form, wobei die Längserstreckung in Richtung der Schnittlinie II-II länger ist als jene quer dazu. Die Darstellung in Fig. 1 zeigt in der rechten Hälfte den vollständig montierten Zustand, während die linke Hälfte nur teilweise montiert ist.

Die Mähscheibe umfasst den Mähteller 1, dessen Oberfläche als obere Mantelfläche 2 bezeichnet wird. Der zentrale Antriebsbereich 3 des Mähtellers 1 ist mit der hier nicht dargestellten Tellernabe verbunden, wobei die Verbindung mittels Schrauben über die Schraublöcher 4 erfolgt. Für den Mähvorgang wird die Mähscheibe um die Drehachse 5 in rasche Drehung versetzt. Der Mähteller 1 ist bevorzugt aus Stahlblech gepresst. Durch Presskanten 6 erhält der Mähteller 1 eine erhöhte Festigkeit und seine nach unten offene Schüsselform. Im Bereich der Lagerung 7 der Mähklingen 15 weist der Mähteller 1 eine Vertiefung 8 auf, die der geschützten Aufnahme des Schraubkopfes 11 des Lagerbolzens 9 dient, der von der Öffnung 24 aufgenommen wird. Der Schutz des Lagerbolzens 9 und insbesondere dessen Schraubkopfs 11 ist durch die stehengebliebenen Erhebungen 10 der Vertiefung 8 gegeben.

Im rechten Teil der Mähscheibe ist die erfindungsgemäß vorgesehene Schutzhaube 12 angeordnet, die mit ihrem Befestigungsbereich 13 am zentralen Antriebsbereich 3 des Mähtellers 1 befestigt ist, bevorzugt mittels Schrauben lösbar befestigt ist. In den Fig. 1 und 2 ist jeweils ein Schutzhaubenteil 12 rechts liegend dargestellt. Bei fertiger Montage der Mähscheibe wird die Schutzhaube 12 auf der linken Seite durch einen gleich aussehenden Schutzhaubenteil 12 ergänzt.

Die Schutzhaube 12 folgt weitgehend der Kontur der oberen Mantelfläche 2 und ist zumindest abschnittweise an dieser anliegend ausgebildet. Im Bereich der Lagerung 7 der Mähklingen 15 kann der Lagerbolzen 9 direkt zum Verschrauben der Mähklinge 15 am Mähteller 1 angeordnet sein, wobei eine Lagerhülse 16 vorgesehen ist, um die leichte Schwenkbarkeit der Mähklinge 15 zu gewährleisten. Somit sind die beiden Mähklingen 15 nicht starr mit dem Mähteller 1 verbunden, sondern werden durch die Fliehkräfte nach außen gedrückt.

Das in Fig. 1 und 2 eingezeichnete Gutleitelement 17 kann eine zusätzliche Leit- und Förderfunktion für das Mähgut übernehmen, ist aber nur eine optionale Ausführungsvariante. In Fig. 2 ist im rechten Abschnitt diese Anordnung mit einem Gutleitelement 17 eingezeichnet und dieses Gutleitelement 17 weist ebenfalls eine topfförmige Vertiefung 18 auf, um den Schraubkopf 11 des Lagerbolzens 9 aufzunehmen und seitlich zu schützen. Die Lagerung 7 der Mähklingen 15 ohne Gutleitelement 17 erfolgt analog der in den Fig. 1 und 2 rechts dargestellten Form, wobei zufolge des Fortfalls des Gutleitelementes 17 der Lagerbolzen 9 etwas kürzer ausgebildet sein kann.

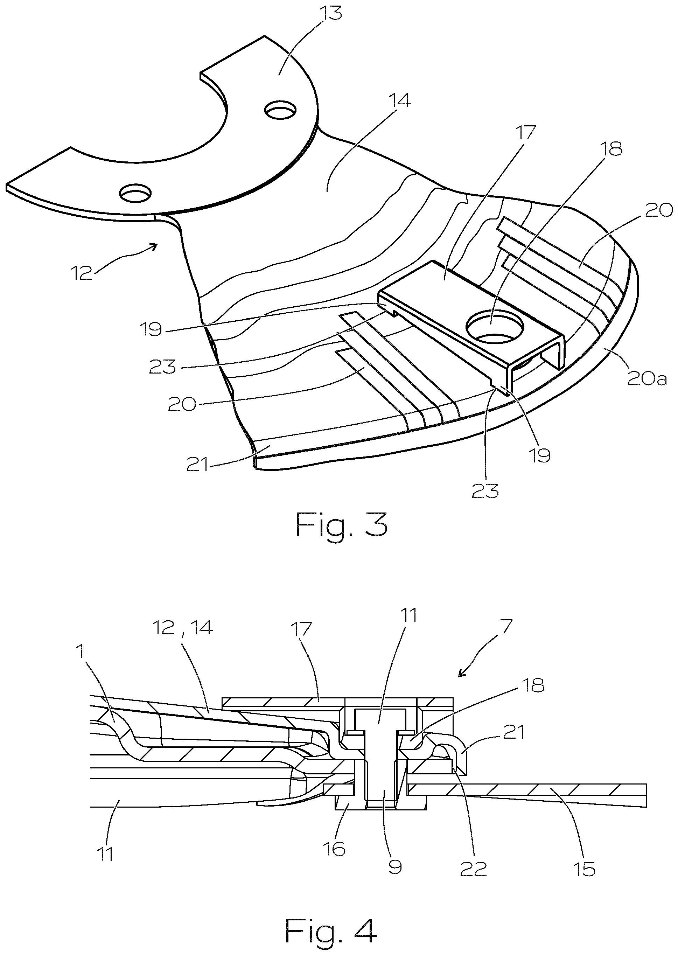

Die Fig. 3 zeigt in Schrägansicht einen der Schutzhaubenteile 12, auf welchem im Schutzbereich 14 das Gutleitelement 17 aufgesetzt ist. Das Gutleitelement 17 wird mittels des hier nicht dargestellten Lagerbolzens 9 mit dem Mähteller 1 verschraubt, wobei der Schraubkopf 11 durch die nach oben ragenden Abschnitte der topfförmigen Vertiefung 18 geschützt wird. Eine formschlüssige Verbindung des Gutleitelementes 17 mit der Schutzhaube 12 wird dadurch erzielt, dass das Gutleitelement 17 nach unten stehende Raststege 19 aufweist, die in mit den Raststegen 19 fluchtende Rastnuten 23 des Schutzbereichs 14 der Schutzhaube 12 einrasten.

Die Oberfläche des Schutzbereichs 14 der Schutzhaube 12 ist bevorzugt gehärtet und/oder kann mit einer vollflächigen oder gemäß Fig. 3 mit mehreren partiellen Verschleißschutzzonen 20 versehen sein. Die Lage und Ausführung der Verschleißschutzzonen 20 kann der jeweiligen Verschleißbeanspruchung angepasst werden. Insbesondere kann die besonders verschleißexponierte nach unten gebördelte Randzone 21 des Schutzbereichs 14 der Schutzhaube 12 mit einer noch verschleißbeständiger ausgeführten partiellen Verschleißschutzzone 20a vor Verschleiß geschützt werden. Die durch das Herstellen von Verschleißschutzzonen 20 eventuell auftretende Beeinträchtigung der Materialeigenschaften der Schutzhaube 12 kann außeracht gelassen werden, da die hohen Zug- und Schlagkräfte der Mähklingen 15 nur von dem Mähteller 1 aufzunehmen sind, während die Schutzhaube 12 von diesen Kräften nicht beeinflusst wird.

Die Fig. 4 zeigt den Bereich der Lagerung 7 der Mähklingen 15 mit Anordnung des Gutleitelements 17 etwas vergrößert. Die Schutzhaube 12 weist im Schutzbereich 14 eine nach unten gebördelte Randzone 21 auf, die die Stirnfläche 22 des Mähtellers 1 umgreift.

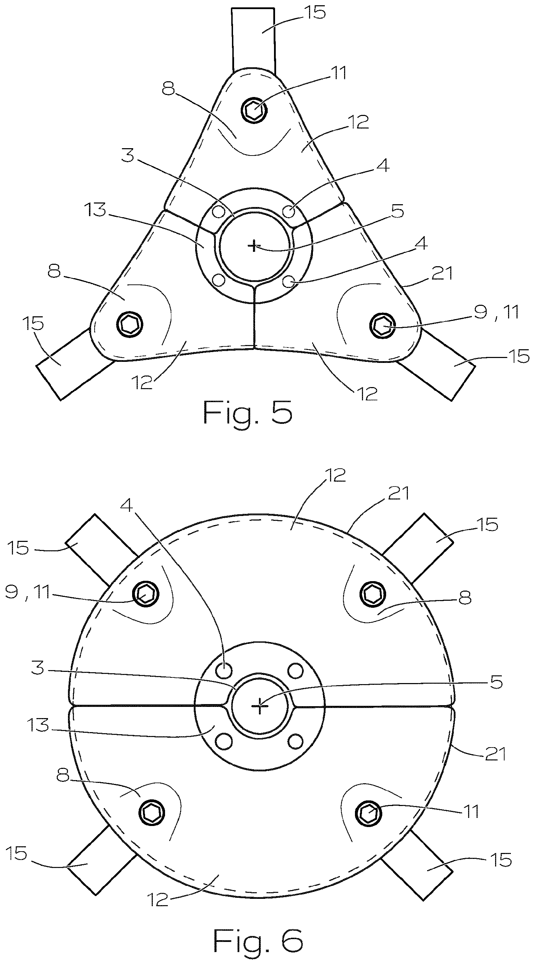

Die Fig. 5 zeigt schematisch die Aufsicht auf eine Mähscheibe in dreieckiger Form mit drei Mähklingen 15 und drei zugeordneten Schutzhaubenteilen 12. Die Ausführung der Schutzhaubenteile 12 und deren Befestigung am Mähteller 1 gleicht der Ausführung gemäß den Figuren 1 bis 4. Jeder Schutzhaubenteil 12 ist sowohl durch den zugehörigen Lagerbolzen 9 als auch durch Verschraubung im Befestigungsbereich 13 über die Schraublöcher 4 mit dem zentralen Antriebsbereich 3 des Mähtellers 1 befestigt.

Ähnlich wie bei den vorherigen Ausführungsbeispielen können im Bereich der Lagerung 7 der Mähklingen 15 auch Gutleitelemente 17 angeordnet werden. Ebenso kann diese dreieckige Ausführungsform der Mähscheibe mit entsprechenden
Verschleißschutzzonen 20 ausgestattet werden, wie dies in Fig. 3 dargestellt ist. Die Lage der Verschleißschutzzonen 20 ist selbstverständlich an die Verschleißbeanspruchung der Mähscheibe anzupassen.

Die Fig. 6 zeigt ein Ausführungsbeispiel für eine kreisrunde Mähscheibe, wobei die Schutzhaubenteile 12 jeweils mit den Lagerbolzen 9 von zwei Mähklingen 15 und zusätzlich durch Verschraubung über die Schraublöcher 4 mit dem zentralen Antriebsbereich 3 des Mähtellers 1 befestigt sind.

Auch bei den in Fig. 5 und 6 dargestellten Ausführungsformen ist es möglich, vorgegebene Mähscheiben bereits bei der Erstmontage oder nachträglich mit den Schutzhauben 12 auszustatten, um sie verschleißbeständiger zu machen. Auch das Auswechseln von Schutzhaubenteilen 12 ist ohne größeren Demontageaufwand möglich.

Die Fig. 5 und 6 sollen veranschaulichen, dass die Verschleißschutzvorrichtung jeder beliebigen Form von Mähscheiben angepasst werden kann.

### Bezugszeichenliste

1 Mähteller
2 obere Mantelfläche
3 zentraler Antriebsbereich
4 Schraubloch
5 Drehachse
6 Presskante
7 Lagerung
8 Vertiefung
9 Lagerbolzen
10 Erhebung
11 Schraubkopf
12 Schutzhaube oder Schutzhaubenteil
13 Befestigungsbereich
14 Schutzbereich
15 Mähklinge
16 Lagerhülse
17 Gutleitelement
18 topfförmige Vertiefung
19 Raststeg
20, 20a Verschleißschutzzone
21 Randzone
22 Stirnfläche
23 Rastnut
24 Öffnung

## Patentansprüche

1. Verschleißschutzvorrichtung für Mähscheiben für Rotormähwerke, wobei die Mähscheiben jeweils einen Mähteller (1) mit zentralem Antriebsbereich (3) und eine obere Mantelfläche (2) aufweisen und der Mähteller (1) an seiner Peripherie mit Mähklingen (15) bestückbar ist, **dadurch gekennzeichnet, dass** die Verschleißschutzvorrichtung durch eine auf der oberen Mantelfläche (2) befestigbare ein- oder mehrteilige Schutzhaube (12) gebildet ist, die der Kontur der Mantelfläche (2) folgend und zumindest abschnittweise an dieser anliegend ausgebildet ist und dass im Bereich der Lagerung (7) der Mähklinge (15) eine Vertiefung (8) zur Aufnahme des Schraubkopfes (11) des Lagerbolzens (9) der Mähklinge (15) vorgesehen ist, um diesen zu schützen.

2. Verschleißschutzvorrichtung nach Anspruch 1, **dadurch gekennzeichnet, dass** die Schutzhaube (12) am zentralen Antriebsbereich (3) des Mähtellers (1) befestigt, bevorzugt lösbar befestigt, ist.

3. Verschleißschutzvorrichtung nach Anspruch 2, **dadurch gekennzeichnet, dass** die Schutzhaube (12) im Bereich der Lagerung (7) der Mähklingen (15) am Mähteller (1) zusätzlich mittels Lagerbolzen (9) befestigbar ist.

4. Verschleißschutzvorrichtung nach Anspruch 2 oder 3, **dadurch gekennzeichnet,**
**dass** die Schutzhaube (12) aus zumindest zwei Schutzhaubenteilen (12) gebildet ist, die sich jeweils vom zentralen Antriebsbereich (3) in Richtung Lagerung (7) der Mähklingen (15) erstrecken und mit einer nach unten gebördelten Randzone (21) die Stirnfläche (22) des Mähtellers (1) an der Peripherie umgreifen.

5. Verschleißschutzvorrichtung nach einem der Ansprüche 1 bis 4, **dadurch gekennzeichnet, dass** die Oberfläche der Schutzhaube (12) gehärtet und/oder mit einer vollflächigen oder mehreren partiellen Verschleißschutzzonen (20) versehen ist.

6. Verschleißschutzvorrichtung nach einem der Ansprüche 1 bis 5, **dadurch gekennzeichnet, dass** auf der Oberfläche der Schutzhaube (12) zumindest ein von der Oberfläche vorstehendes Gutleitelement (17) angeordnet ist.

7. Verschleißschutzvorrichtung nach Anspruch 6, **dadurch gekennzeichnet, dass** das Gutleitelement (17) mittels des Lagerbolzens (9) mit dem Mähteller (1) verschraubt ist und den Schraubkopf (11) schützend überragt.

8. Verschleißschutzvorrichtung nach Anspruch 6 und 7, **dadurch gekennzeichnet, dass** das Gutleitelement (17) Raststege (19) aufweist, die in Rastnuten (23) der Schutzhaube (12) einrasten.

9. Verschleißschutzvorrichtung nach einem der Ansprüche 1 bis 8, **dadurch gekennzeichnet, dass** die Schutzhaube (12) aus Stahl geformt ist.

10. Mähscheibe, **dadurch gekennzeichnet, dass** sie mit einer
Verschleißschutzvorrichtung nach einem der Ansprüche 1 bis 9 versehen ist.

11. Mähscheibe nach Anspruch 10, **dadurch gekennzeichnet, dass** jedem Schutzhaubenteil (12) eine Mähklinge (15) zugeordnet ist.

12. Mähscheibe nach Anspruch 10, **dadurch gekennzeichnet, dass** den Schutzhaubenteilen (12) je eine und/oder mehrere Mähklingen (15) zugeordnet sind.
